(19) Europäisches Patentamt
European Patent Office
Office européen des brevets

(11) **EP 4 309 120 B1**

(12) **EUROPEAN PATENT SPECIFICATION**

(45) Date of publication and mention of the grant of the patent:
**05.08.2026 Bulletin 2026/32**

(21) Application number: **21931871.4**

(22) Date of filing: **17.03.2021**

(51) International Patent Classification (IPC):
*G06Q 10/08* *(2024.01)*

(52) Cooperative Patent Classification (CPC):
**G06Q 10/08; G06Q 10/08772; G06V 10/62; G06V 10/82; G06V 20/52; G06V 40/28;**
G06Q 10/08726

(86) International application number:
**PCT/TR2021/050243**

(87) International publication number:
**WO 2022/197259 (22.09.2022 Gazette 2022/38)**

(54) **SYSTEM AND METHOD OF MONITORING UNITS IN A CABINET**

SYSTEM UND VERFAHREN ZUR ÜBERWACHUNG VON EINHEITEN IN EINEM SCHRANK

SYSTÈME ET PROCÉDÉ DE SURVEILLANCE D'UNITÉS DANS UNE ARMOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.01.2024 Bulletin 2024/04**

(73) Proprietor: **Vispera Bilgi Teknolojileri Sanayi Ic Ve Dis Ticar A.S.**
**34330 Besiktas/Istanbul (TR)**

(72) Inventors:
• **YORUK, Erdem**
**34340 Besiktas/Istanbul (TR)**

• **ATICI, Efehan**
**Maltepe/Istanbul (TR)**
• **TEKE, Burak**
**Kagithane/Istanbul (TR)**

(74) Representative: **Atalay, Baris**
**Alfa Patent Stan Advoka Ltd. Co.**
**Dumen Sok**
**Gumussuyu Is Merkezi, No: 11, Kat: 4**
**34427 Beyoglu/Istanbul (TR)**

(56) References cited:
CA-A1- 3 072 063    US-A1- 2006 178 947
US-A1- 2009 204 512    US-A1- 2018 374 069
US-A1- 2019 236 530    US-A1- 2020 097 776

## Description

TECHNICAL FIELD

In general, the present invention relates to the field of retailing. In particular, the present invention relates to an artificial intelligence supported monitoring system and method that enables the observation of units in a cabinet or a horizontal product display unit.

PRIOR ART

Retailers generally offer categories of products associated with their core activities. For example, supermarkets provide food, health and beauty care and household products, whereas ophthalmic stores provide eyeglasses and accessories. For each category of product, retailers also provide an item assortment to satisfy a wide range of clients by providing items of different brands, designs, sizes, colors, prices, etc.

Suppliers can have considerable influence on retailers, for example by providing financial support or even by providing display cabinet for arranging the products in the retailer shop. For instance, retailers have ice cream cabinets having the supplier logo on them. In return, the suppliers expect their products to be preferentially distributed in the retailer store and/or within the retail unit. In view of large investments by suppliers to support their brand management for having their product prominently displayed in the retailer stores, suppliers would appreciate receiving verification that their product are being displayed accordingly, and as agreed upon with the retailers. Also, the suppliers need to know the exact inventory at the point of sales, in order to direct their supply chain effectively and prevent loss of sales due to out of stock items. It is important to have an exact and real time knowledge about inventory at all times and all points of sales without accessing their cashier data but using the distributed IoT system based on AI and image recognition.

Current techniques of monitoring item display in retailer shops are generally in the form of human inspection visits to retailer stores and there is therefore a need to improve efficiency of these techniques.

The present invention enables monitoring the instantaneous quantity of products such as ice cream exhibited in horizontal cooling cabinets by using a cabinet-mounted camera and machine learning technologies. The supply chain management of the manufacturer with instant product stock tracking provides faster reaction time and data monitoring. Knowing the missing products instantly with their attributes and the sales points which have missing products will bring logistical advantage by directing the product supply operation to the required place, as well as eliminating the stock problems.

Stock tracking of products on market shelves is available in artificial intelligence supported smart shopping systems (Amazon Go, Standard Cognition...) and automatic product recognition and inventory applications. In these systems, product identification and detection operations are performed by using mobile camera images taken by the user, more than one fixed camera looking at the shelves and various sensors that take measurements.

The state of the art document US10334965B2 mentions a monitoring device including a fixed area setter that sets an area of a part of a display shelf to be monitored as a fixed area, based on a captured image of the display shelf in a store, a shelf detector that detects the display shelf, by determining a similarity between an image of the fixed area set by the fixed area setter and an image at the same position as the fixed area, from the captured image of the store, and an alert notifier that notifies a user that the display shelf to be monitored is not detected, when it is determined that there is no similarity.

The document CN107392520A which is another state of the art teaching, discloses a supermarket replenishment system. The system comprises: a storage tank, a sensing module, a date monitoring module, and a management module. The bottom surface of the storage tank is inclined, and the sensing module is installed at a relatively low side in the storage tank; and the management module is respectively connected with the sensing module and the date monitoring module. According to the supermarket replenishment system disclosed by the present invention, by using the manner, whether the commodity is out of stock can be monitored, and the dates can also be monitored, so that the expired food can be prevented from being sold, and the large amount of labor is reduced.

The teaching of the document US10395211B2 discloses an apparatus for monitoring inventory on a shelf. The invention describes an apparatus for determining the number of packages on a shelf or hanger. The number of packages on a shelf or hanger is determined by detecting the presence of a package on the shelf and adding all detections together to determine the number of products on a shelf. In another embodiment, the product is identified by an identifying device such as an SKU reader. Thus, the quantity and type of product located on a shelf or hanger is known. Such information allows a store to know the type and quantity of packages needed to restock a specific shelf.

Document US 2018/374069 A1 discloses assessing inventory of products on product shelves using pressure sensitive devices.

Document CA 3 072 063 A1 refers to tracking puts and takes of inventory items by subjects in an area of real space.

In these examples, generally, products aimed to be recognized automatically are displayed on the shelves and have an organized alignment.

The products that are aimed to be recognized and accounted in the present invention, displayed on the shelves in a distributed manner or in a piled-up manner. In this respect, product recognition and updating inventory status is more difficult as the products are not always visible fully. In addition, if the products are needed to be stored in cold cabinets such as ice cream, therefore; located in the refrigerated cabin, usually in frosted environments and behind a glass cover that causes foggy vision and undesirable reflections, making the image recognition process even more difficult. The use of cameras inside the cabin also causes the camera lens to fog in a cold environment and prevents a camera placement that can see all cabin seats at a correct angle.

One of the aims of the invention is to provide instant tracking of products displayed in cooling cabinets by using a camera and deep learning technologies.

Another aim of the invention is to enable immediate recognition of the missing products with their identities.

Another aim of the invention is to identify the sales points with missing products.

Another aim of the invention is to direct the product supply operation to the required sales point and to eliminate the problem of products being out of stock.

In brief, it is preferable to have an inventory monitoring system which provides real time accounting of the product on each shelf. Moreover, it is preferable that the monitoring system is capable of identifying the type of product on the shelf so that both the product type and quantity of product on a shelf can be known. Finally, it is desirable that the monitoring system is cost effective to maximize the return on investment and profit.

BRIEF DESCRIPTION OF THE DRAWINGS

The figures whose descriptions are given below, aim to exemplify monitoring products in a cabinet with a deep learning assistance whose advantages with respect to the state of the art are already summarized above and will be discussed in detail hereinafter.

The figures should not be construed as limiting the scope of protection as defined in the claims, and are not to be referenced solely in interpreting the scope of said claims without regarding the technique in the description.

Figure 1 shows general overview of the present invention.

Figure 2 shows workflow of the operation in the present invention.

Figure 3 is a view of an algorithmic workflow according to an embodiment of the present invention.

Figure 4 is a top view of a cabinet cover and a user according to an embodiment of the present invention.

Figure 5 is a difference map algorithm between next and previous vertical edge responses according to an embodiment of the present invention.

DETAILED DESCRIPTION OF THE INVENTION

The following numerals are referred to in the detailed description of the present invention:

11) Cabinet

12) Camera

13) Rod

14) Cover

Generally, this invention relates to a method and apparatus for monitoring inventory on a cabinet (11) in real time. Specifically, this invention may be utilized on a self-adjusting cabinet (11). Self-adjusting cabinet (11) refers to any cabinet (11) which automatically orders the product missing or out of stock on the cabinet (11).

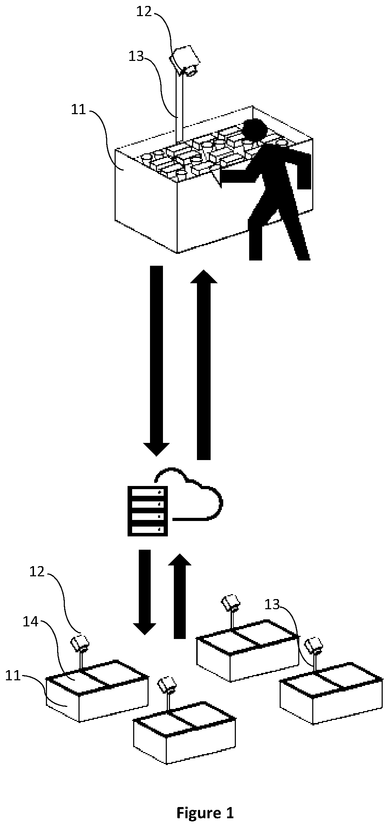

Figure 1 shows the system of the present invention comprising a system backend, product display cabinet (11), a cover (14) of the cabinet (11) and a camera (12). Said camera (12) with field of view entirely capturing the cabinet (11) cover (14) provides image capture from the cabinet (11). Said cabinet (11) has products stacked inside. In a preferred embodiment of the present invention, said cover (14) is a glass sliding cover. Any customer can interact with the cabinet (11) and products inside it. As a consequence of this interaction, one or multiple products can be taken out or placed in of said cabinet (11) by the customer. In a preferred embodiment of the invention, the cabinet (11) has a rod (13) for mounting the camera (12) and edge hardware. Said edge hardware comprising the camera (12) and an internet connected edge computer. In many embodiments the products placed in horizontal cabinets (11) which provides a clear vision from top for precise item identification and all the interactions.

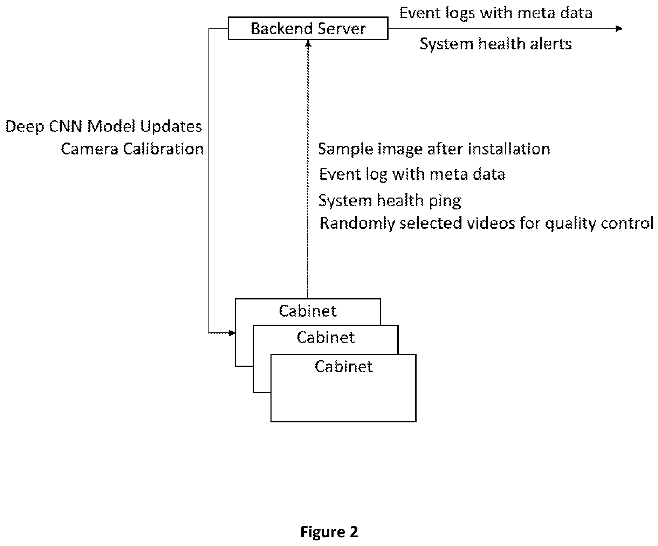

The workflow in Figure 2 shows the layout of the system. Once hardware components are installed at the cabinet (11), it is configured remotely with assignment of device meta data (store ID, cabinet ID, initial inventory etc), deployment of video recognition software (motion sensing, inference models for grabbed product detection/tracking/recognition and action recognition) and camera (12) calibration. When customers make visits at the cabinet (11) and interact with the items, customer-cabinet interaction events are detected at the camera (12) with cabinet cover motion sensing and the corresponding interaction videos are processed at the edge to infer what items are taken away or put inside the cabinet (11), producing an event log like the transaction log of a cashier register. Cabinet event logs with meta data are sent to the cloud backend server and inventory statuses of individual cabinets (11) are accordingly updated. After the installation, a sample image is sent to backend server, event log with meta data is created, system health ping is checked, and randomly selected videos are sent for quality control. A sample image is sent to backend server for camera calibration. When the system goes live, event logs with meta data, system health pings and randomly selected videos are regularly sent from the cabinets (11) to the backend server for inventory tracking, system health monitoring and quality control purposes, respectively. Backend server calibrates the camera (12) according to deep convolutional neural network model updates. Moreover, backend server calibrates the camera (12) to the cabinet cover region and synchronizes deep convolutional neural network updates at the edge for recognizing newly introduced products if there are any.

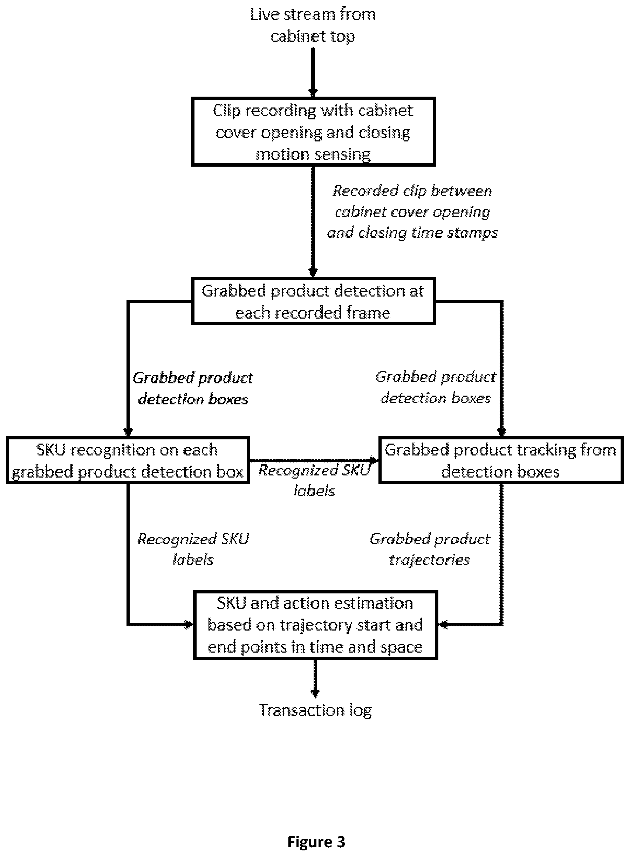

The workflow in Figure 3 shows steps required for stock updates. Firstly, the cabinet cover motion detects the status of the cover (14). This status has two positions; one of them is opened and the other one is closed. Secondly, grabbed product detection occurs at each recorded frame. After that, the system recognizes the grabbed product. Then, the system provides product tracking through the customer-cabinet interventions within the field of view. Finally, the grabbed product trajectory classification for action inference is achieved.

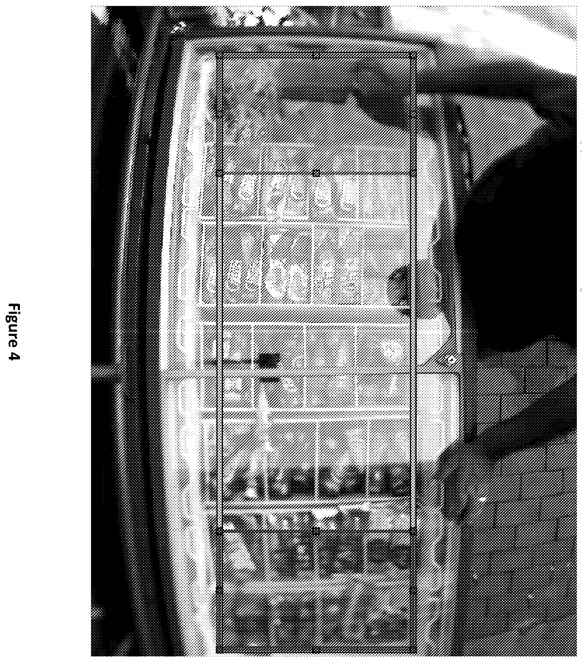

In an embodiment of the invention as can be seen on Figure 4, said cover (14) movement direction is decided by detecting horizontal movements of vertical extensions inside calibrated cabinet (11) side regions. Said cabinet side regions are starting from the short sides of the cabinet (11). If said vertical extension is moving towards to parallel short edge on said side region, the system detects that the cover (14) is opened. If said vertical extension is moving towards to same short edge on said side region, the system detects that the cover (14) is closed. Generally, there are two sliding covers (14) on the cabinets (11) and the vertical extensions on them are located at the short edges of the cabinet (11) when the cover (14) is in closed position. The customer holds and slides the vertical extension to the center of the cabinet (11) to open the cover (14). The short edge regions for cover (14) motion are set during camera (12) field of view calibration. In an alternative embodiment of the invention, widths short edge regions are set as 1/5 of total cover (14) width.

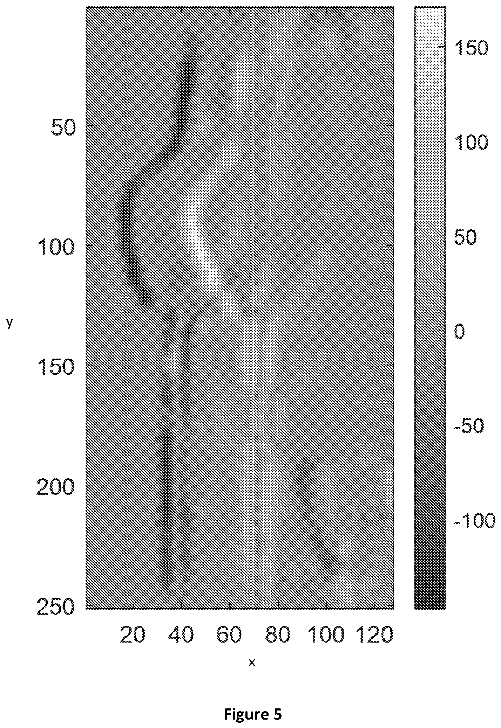

Figure 5 shows the streaming video (V) as a spatial and temporal mathematical function, where V(x,y,t) denotes the pixel intensity value at 2D position (x,y) and at temporal frame index t. Derived from V, $H(x,y,t+1)$ and $H(x,y,t-1)$ are vertical edge responses and will be large at vertical edge patterns (sharp luminance changes in x-direction), in the next and previous frames, respectively. Their difference $D(x,y,t)$ will cancel out everywhere, except for vertical edge patterns that are horizontally shifted from time t-1 to t+1. Thus, $D(x,y,t)$ evaluated within the short edge regions will contain nonzero vertical stripes whenever there is a horizontal movement of the corresponding cover (14).

The magnitudes and relative horizontal locations of positive and negative parts of $D(x,y,t)$ will reveal the significance and direction of cover (14) movement. Depending on the short edge region, these will indicate opening or closing movements of the cover (14).

Cover states at short side regions are set to open, whenever the corresponding motion scores ($m\_L$ (t) and $m\_R$ (t)) derived from D(x,y,t) exceed a positive opening threshold, and set back to closed, whenever they fall below a negative closing threshold afterwards.

Video recording is triggered when any of the cover states are set to open and terminated when both cover states go back to closed.

Using a buffer for the live stream the record start and end times are set with a margin before and after the cover opening and closing events.

In Figure 5, $V(x,y,t)$ denotes the gray scale value (converted from the original 3-channel RGB values) at pixel location $(x,y)$ and frame time $t$.

At each frame time $t$ and for each pixel location $(x,y)$ in side region,
Vertical edge response map at the next frame $H(x,y,t+1) =|V(x+1,y,t+1)-V(x-1,y,t+1)|$ and $H(x,y,t-1)=|V(x+1,y,t-1)-V(x-1,y,t-1)|$ is computed.

Difference map between next and previous vertical edge responses $D(x,y,t)= H(x,y,t+1)-H(x,y,t-1)$ is computed.

For positive part of difference map, if $D(x,y,t)>0$ set $D+ (x,y,t)= D(x,y,t)$, else set $D_+ (x,y,t)=0$ is computed.

For negative part of difference map, if $D(x,y,t)<0$ set $D_- (x,y,t)=-D(x,y,t)$, else set $D-(x,y,t)=0$ is computed.

For each pixel row y in short edge region, mean horizontal location of positive part along row y of region,

$$\bar{x}_+(y,t) = \frac{\sum_{x:(x,y)\in L} x \times D_+(x,y,t)}{\sum_{x:(x,y)\in L} D_+(x,y,t)}$$

is computed.

Mean horizontal location of negative part along row y of region,

$$\bar{x}_-(y,t) = \frac{\sum_{x:(x,y)\in L} x \times D_-(x,y,t)}{\sum_{x:(x,y)\in L} D_-(x,y,t)}$$

is computed.

Mean horizontal shift between positive and negative parts of difference map along row y of region,

$$s(y,t) = \bar{x}_+(y,t) - \bar{x}_-(y,t)$$

is computed.

Maximum positive part along row y of region,

$$d_+(y,t) = \max_{x:(x,y)\in L} D_+(x,y,t)$$

is computed.

Maximum negative part along row y of region,

$$d_-(y,t) = \max_{x:(x,y)\in L} D_-(x,y,t)$$

is computed.

Shifted edge score at row y of region, given as the minimum of maximum positive and negative parts,

$$e(y,t) = \min\{d_+(y,t), d_-(y,t)\}$$

is computed.

Minimum edge shift score across all rows of region,

$$f(t) = \min_{y:(x,y)\in L} e(y,t)$$

is computed.

Mean horizontal shift between positive and negative parts weighted-averaged across all rows of region,

$$g(t) = \frac{\sum_{x:(x,y)\in L} s(y,t) \times e(y,t)}{\sum_{x:(x,y)\in L} e(y,t)},$$

is computed.

Directional cabinet cover motion score,

$$m_L(t) = f(t) \times g(t)$$

is computed.

For $m\_R$ (t), above steps should be repeated.

By monitoring area corresponding to the cabinet (11), movements of grabbed item (hand and the item) can be obtained. A plurality of models may be used for image recognition, for example, a plurality of neural network models trained in advance may be employed. The operation action of the customer or employee in the monitoring image and the target item corresponding to the operation action are identified, and the operation action includes a take-out action, a put-back action. For the identification of the monitoring image, a pre-trained neural network model may be used. Behavior recognition can be obtained by extracting and analyzing the characteristics of hand gestures using a trained neural network model. Detection networks can be trained with lots of video frames, where instances of item grabbing hands are manually bounding boxed and labeled as positive samples. During training, the deep networks learn the patterns of hand-item configurations, regardless of item product stock keeping unit (SKU) ID. In an alternative embodiment of the invention, in the training phase, the image data can be marked with the SKU and the image data of the take-out action and the return action may be used for training.

In an embodiment of the invention, detected item bounding boxes are cropped and processed for recognition. Recognition can be done by Deep Convolutional Neural Networks (e.g. ResNet, EfficientNet). Recognition Networks are trained on lots of cropped item images, for instance ice cream images, now labeled with corresponding SKU IDs. When run on detected boxes of hand-item configurations the network returns the predicted SKU ID of the grabbed item. Detection boxes at successive frames are matched to each other based on their proximity, texture similarity and recognized SKU IDs. Matched boxes across the clip form a trajectory per each grabbed item.

In another embodiment of the invention, the spatial and temporal start and end points of each grabbed item trajectory over the entire recording will determine whether the item is taken, put or shuffled and treated as product trajectory classification.

If the trajectory starts after cover opening and inside the cabinet (11) and ends after cover closing and outside the cabinet region, then it is classified as "Take".

If the trajectory starts before cover opening and outside the cabinet (11) and ends before cover closing and inside the cabinet region, then it is classified as "Put".

If the trajectory starts after cover opening and inside the cabinet region, and end before cover closing and inside the cabinet region, then it is classified as "Shuffle".

Take and Put events are registered to the transaction log with the corresponding SKU IDs.

The methods and apparatuses shown in the accompanying figures and the detailed description of the embodiments of at least one of the system and the computer-readable permanent media, fall within the scope of the appended claims.

**Claims**

1. An apparatus for monitoring inventory comprising;

   an edge hardware comprising a camera (12) an internet connected computer,
   said camera (12) configured for detecting automatically and in real time in a monitoring area comprising a horizontal cabinet (11),
   a backend system being configured to managing, and keeping a stock data and updating them,
   wherein;
   said camera (12) having a field of view which entirely capturing a cover (14) of a horizontal cabinet (11),
   said camera (12) recording when any of the cover states are set to open,
   said camera (12) stops recording then cover states are closed,

the apparatus is configured to automatically detect, identify and track products through deep learning when the cover states are open, said apparatus being further configured to determine cover states based on horizontal movements of vertical extensions in the horizontal cabinet (11) side regions based on horizontal shift of vertical edge patterns, and said apparatus being further configured to perform the detection, identification and tracking of products based on hand-item configurations in the horizontal cabinet (11).

2. An apparatus according to claim 1, **characterized by**; said camera (12) mounted on a rod (13).

3. An apparatus according to claim 1, **characterized by**; said apparatus generating short edge regions on cover (14).

4. An apparatus according to claim 3, **characterized by**; maximum widths of short edge regions are set as 1/5 of total cover (14) width.

5. An apparatus according to claim 1, **characterized by**; said apparatus cropping images comprising hand with an item as detected item bounding boxes.

6. An apparatus according to claim 1, **characterized by**; said apparatus labelling detected product images with corresponding SKU IDs.

7. A method for monitoring inventory of a horizontal cabinet, implementable by an edge hardware, a backend system and an apparatus for product detection comprising the steps of:

determining a cover state being open based on horizontal movements of vertical extensions in cabinet side regions based on horizontal shift of vertical edge patterns,

recording a clip when the cover state set to open, detecting, identifying, and tracking the grabbed product based on hand-item configurations in the horizontal cabinet through deep learning,

generating the grabbed product trajectory classification,

updating stock information based on the initial amount of the product.

8. The method of claim 7 further comprising the steps of:

alarming the user if the inventory is below a predetermined threshold.

**Patentansprüche**

1. Vorrichtung zur Bestandsüberwachung, umfassend:

eine Edge-Hardware, die eine Kamera (12) und einen mit dem Internet verbundenen Computer umfasst,

wobei die Kamera (12) konfiguriert ist, um automatisch und in Echtzeit in einem, einen horizontalen Schrank (11) umfassenden Überwachungsbereich, Detektionen durchzuführen,

wobei ein Backend-System konfiguriert ist, um Bestandsdaten zu verwalten, führen und diese zu aktualisieren,

wobei:

die Kamera (12) ein Sichtfeld aufweist, das eine Abdeckung (14) eines horizontalen Schranks (11) vollständig erfasst,

die Kamera (12) aufzeichnet, wenn einer der Abdeckungszustände auf "offen" gesetzt ist,

die Kamera (12) die Aufzeichnung stoppt, wenn die Abdeckungszustände "geschlossen" sind,

die Vorrichtung konfiguriert ist, durch Deep Learning Produkte automatisch zu detektieren, identifizieren und zu verfolgen, wenn die Abdeckungszustände offen sind, wobei die Vorrichtung ferner konfiguriert ist, die Abdeckungszustände auf der Grundlage von horizontalen Bewegungen von vertikalen Fortsätzen in den Seitenbereichen des horizontalen Schranks (11) aufgrund der horizontalen Verschiebung von vertikalen Kantenmustern bestimmt, und wobei die Vorrichtung ferner konfiguriert ist, die Detektion, Identifizierung und Verfolgung von Produkten auf der Grundlage von Hand-Artikel-Konfigurationen im horizontalen Schrank (11) durchzuführen.

2. Vorrichtung nach Anspruch 1 **dadurch gekennzeichnet, dass** die Kamera (12) an einer Stange (13) montiert ist.

3. Vorrichtung nach Anspruch 1 **dadurch gekennzeichnet, dass** die Vorrichtung kurze Randbereiche an der Abdeckung (14) erzeugt.

4. Vorrichtung nach Anspruch 3 **dadurch gekennzeichnet, dass** die maximalen Breiten der kurzen Randbereiche als 1/5 der Gesamtbreite der Abdeckung (14) eingestellt sind.

5. Vorrichtung nach Anspruch 1 **dadurch gekennzeichnet, dass** die Vorrichtung, die Bilder die eine Hand mit einem Artikel umfassen, als detektierte Artikel-Begrenzungsrahmen ausschneidet.

6. Vorrichtung nach Anspruch 1 **dadurch gekennzeichnet, dass** die Vorrichtung die detektierte Produktbilder mit entsprechenden SKU-IDs kennzeichnet.

7. Verfahren zur Überwachung des Bestands eines horizontalen Schranks, das durch eine Edge-Hardware, ein Backend-System und eine Vorrichtung zur Produktdetektion implementierbar ist, umfassend die folgenden Schritte:

Bestimmen eines Abdeckungszustands als "offen" auf der Grundlage von horizontalen Bewegungen von vertikalen Fortsätzen in den Seitenbereichen des Schranks aufgrund der horizontalen Verschiebung von vertikalen Kantenmustern,

Aufzeichnen eines Clips, wenn der Abdeckungszustand auf "offen" gesetzt ist,

durch Deep Learning Detektieren, Identifizieren und Verfolgen des gegriffenen Produkts auf Grundlage von Hand-Artikel-Konfigurationen im horizontalen Schrank, Erzeugen der Trajektorienklassifizierung des gegriffenen Produkts, Aktualisieren der Bestandsinformationen auf Basis der ursprünglichen Menge des Produkts.

8. Verfahren nach Anspruch 7, ferner umfassend den Schritt des Alarmieren des Benutzers, wenn der Bestand unter einem vorbestimmten Schwellenwert liegt.


**Revendications**

1. Appareil de surveillance d'inventaire comprenant :

un Hardware Edge comprenant une caméra (12) et un ordinateur connecté à Internet, ladite caméra (12) étant configurée pour détecter automatiquement et en temps réel dans une zone de surveillance comprenant un meuble horizontal (11),

un système informatique dorsal étant configuré pour gérer, conserver et mettre à jour des données de stock,

dans lequel :

ladite caméra (12) ayant un champ de vision qui capture entièrement un couvercle (14) d'un meuble horizontal (11),

ladite caméra (12) enregistrant lorsque l'un quelconque des états de couvercle est défini sur ouvert, ladite caméra (12) arrêtant l'enregistrement lorsque les états de couvercle sont fermés,

l'appareil est configuré pour détecter, identifier et suivre automatiquement des produits par apprentissage profond lorsque les états de couvercle sont ouverts, ledit appareil étant en outre configuré pour déterminer les états de couvercle sur la base de mouvements horizontaux d'extensions verticales dans les zones latérales du meuble horizontal (11) sur la base d'un décalage horizontal de motifs de bords verticaux, et ledit appareil étant en outre configuré pour effectuer la détection, l'identification et le suivi de produits sur la base de configurations main-article dans le meuble horizontal (11).

2. Appareil selon la revendication 1, **caractérisé en ce que** ladite caméra (12) est montée sur une tige (13).

3. Appareil selon la revendication 1, **caractérisé en ce que** ledit appareil génère des zones de bord court sur le couvercle (14).

4. Appareil selon la revendication 3, **caractérisé en ce que** les largeurs maximales des zones de bord court sont définies comme étant égales à un cinquième (1/5) de la largeur totale du couvercle (14).

5. Appareil selon la revendication 1, **caractérisé en ce que** ledit appareil recadre des images comprenant une main avec un article sous forme de boîtes de délimitation d'article détecté.

6. Appareil selon la revendication 1, **caractérisé en ce que** ledit appareil étiquette des images de produits détectés avec des identifiants SKU correspondants.

7. Procédé de surveillance d'inventaire d'un meuble horizontal, pouvant être mis en œuvre par un Hardware Edge, un système informatique dorsal et un appareil de détection de produits comprenant les étapes suivantes :

détermination d'un état de couvercle comme étant défini sur ouvert sur la base de mouvements horizontaux d'extensions verticales dans des zones latérales de meuble sur la base d'un décalage horizontal de motifs de bords verticaux ;

enregistrement d'une séquence vidéo lorsque l'état de couvercle est défini sur ouvert ;

détection, identification et suivi du produit saisi sur la base de configurations main-article dans le meuble horizontal par apprentissage profond ;

génération de la classification de trajectoire du produit saisi ;

mise à jour des informations de stock sur la base de la quantité initiale du produit.

8. Procédé selon la revendication 7 comprenant en outre l'étape d'alerte de l'utilisateur si l'inventaire est inférieur à un seuil prédéterminé.

**Figure 1**

Backend Server

Event logs with meta data

System health alerts

Deep CNN Model Updates
Camera Calibration

Sample image after installation

Event log with meta data

System health ping
Randomly selected videos for quality control

Cabinet

Cabinet

Cabinet

**Figure 2**

Live stream from
cabinet top

↓

Clip recording with cabinet
cover opening and closing
motion sensing

*Recorded clip between*
*cabinet cover opening*
*and closing time stamps*

↓

Grabbed product detection at
each recorded frame

*Grabbed product*
*detection boxes*

*Grabbed product*
*detection boxes*

SKU recognition on each
grabbed product detection box

*Recognized SKU*
*labels*

Grabbed product tracking from
detection boxes

*Recognized SKU*
*labels*

*Grabbed product*
*trajectories*

SKU and action estimation
based on trajectory start and
end points in time and space

↓

Transaction log

**Figure 3**

**Figure 4**

**Figure 5**

**EP 4 309 120 B1**

**REFERENCES CITED IN THE DESCRIPTION**

**Patent documents cited in the description**

- US 10334965 B2
- CN 107392520 A
- US 10395211 B2
- US 2018374069 A1
- CA 3072063 A1